Europäisches Patentamt

European Patent Office

Office européen des brevets

(11) Numéro de publication: **0 228 328**
**A1**

## (12) DEMANDE DE BREVET EUROPEEN

(21) Numéro de dépôt: **86402735.4**

(22) Date de dépôt: **09.12.86**

(51) Int. Cl.⁴: **F 03 G 7/06**
**G 12 B 1/00, H 02 N 10/00**

(30) Priorité: **19.12.85 FR 8518870**

(43) Date de publication de la demande:
**08.07.87 Bulletin 87/28**

(84) Etats contractants désignés: **DE ES FR IT**

(71) Demandeur: **VALEO**
**64, avenue de la Grande Armée**
**F-75848 Paris Cédex 17 (FR)**

(72) Inventeur: **Bouvot, Jean-François**
**2, rue des Grands Prés Le Mesnil Sévin**
**F-78720 Dampierre (FR)**

(74) Mandataire: **Plaçais, Jean-Yves**
**Cabinet Netter 40, rue Vignon**
**F-75009 Paris (FR)**

(54) **Dispositif de commande électrique du déplacement d'un élément entre deux positions prédéterminées.**

(57) L'invention concerne un dispositif de commande électrique du déplacement d'un élément (22) mobile entre deux positions prédéterminées, cet élément (22) étant associé à un ou deux moyens de rappel (18, 30) électriquement conducteurs à mémoire de forme qui n'exercent sensiblement aucune force de rappel sur l'élément (22) quand ils ne sont pas parcourus par un courant électrique et qui exercent sur lui une force suffisante pour le déplacer quand ils sont parcourus par un courant électrique, le passage du courant électrique dans l'un ou l'autre moyen de rappel étant commandé par un interrupteur (10).

L'invention s'applique notamment à la sélection de fonctions pneumatiques, dans l'industrie automobile.

FIG.1

EP 0 228 328 A1

## Description

Dispositif de commande électrique du déplacement d'un élément entre deux positions prédéterminées.

L'invention concerne un dispositif de commande électrique du déplacement d'un élément entre deux positions prédéterminées, cet élément étant, par exemple, l'organe mobile d'un commutateur ou inverseur pneumatique monté en série dans le circuit d'alimentation en pression de fluide d'un organe tel qu'un vérin pneumatique ou analogue.

Un tel dispositif est utilisable en particulier dans l'industrie automobile, pour la sélection des fonctions d'un circuit à logique pneumatique.

On connait déjà des dispositifs de commande électrique dans lesquels un élément mobile à déplacer dans l'une ou l'autre de deux positions prédéterminées est relié, d'une part, à un moyen de rappel qui le sollicite vers une première de ses positions et, d'autre part, au noyau plongeur d'un dispositif à solénoïde qui, quand il est parcouru par un courant électrique, amène l'élément mobile dans la seconde position prédéterminée.

Un tel dispositif a pour inconvénient que l'élément mobile ne peut être maintenu dans sa seconde position que si le courant électrique passe en permanence dans le solénoïde du dispositif de commande.

L'invention a pour objet un dispositif de commande du type précité qui ne consomme de l'énergie électrique que pendant le temps nécessaire au déplacement de l'élément mobile dans l'une quelconque de ses deux positions prédéterminées.

Elle propose à cet effet un dispositif de commande électrique du déplacement d'un élément entre deux positions prédéterminées, cet élément étant associé à un moyen de rappel le sollicitant vers l'une desdites positions, caractérisé en ce que cet élément est associé à un autre moyen de rappel propre à le solliciter vers son autre position prédéterminée et en ce que l'un au moins des moyens de rappel est constitué en un matériau électriquement conducteur à mémoire de forme qui, quand il est chauffé par passage d'un courant électrique, prend une forme prédéterminée en exerçant sur ledit élément une force supérieure à celle exercée par l'autre moyen de rappel et déplace alors ledit élément dans une première position et qui, quand il n'est pas traversé par un courant électrique, exerce une force sensiblement négligeable sur ledit élément.

Ce moyen de rappel en matériau électriquement conducteur à mémoire de forme ne sollicite l'élément mobile vers une position prédéterminée que quand il est parcouru par un courant électrique. L'action de rappel exercée sur cet élément n'est donc pas permanente et n'est utilisée que pour le déplacement de l'élément vers cette position prédéterminée. Ainsi, il n'est pas nécessaire que le dispositif de commande selon l'invention soit parcouru en permanence par un courant électrique pour maintenir l'élément mobile dans cette position prédéterminée.

Selon une autre caractéristique de l'invention, l'élément mobile est relié, par exemple par des moyens à ressort, au contact mobile d'un commutateur électrique monté en série avec le moyen de rappel à mémoire de forme, ce commutateur étant propre à couper le passage du courant dans le moyen de rappel lorsque l'élément mobile a été déplacé d'une position dans l'autre par la force exercée sur lui par le moyen de rappel à mémoire de forme.

Le passage du courant électrique dans le moyen de rappel à mémoire de forme est ainsi coupé automatiquement lorsque l'élément mobile a atteint la position prédéterminée vers laquelle il était sollicité par ce moyen de rappel.

Selon encore une autre caractéristique de l'invention, l'autre moyen de rappel de l'élément mobile est constitué également en un matériau électriquement conducteur à mémoire de forme, qui est monté électriquement en parallèle avec le premier moyen de rappel à mémoire de forme, ces deux moyens de rappel étant reliés à une source d'énergie électrique par un commutateur-inverseur de commande.

Ce commutateur de commande actionné par un utilisateur permet donc, à la volonté de l'utilisateur, de faire passer un courant électrique dans l'un ou l'autre des moyens de rappel à mémoire de forme pour amener l'élément mobile dans l'une ou dans l'autre de ses positions prédéterminées.

Les deux moyens de rappel à mémoire de forme sont montés électriquement en parallèle entre le commutateur-inverseur de commande et le commutateur associé à l'élément mobile.

Ainsi, le passage du courant électrique dans l'un ou dans l'autre des moyens de rapel à mémoire de forme est coupé automatiquement lorsque l'élément mobile atteint l'une quelconque de ses deux positions prédéterminées.

Avantageusement, le dispositif selon l'invention peut comprendre plusieurs éléments déplaçables chacun entre deux positions prédéterminées, qui sont montés en parallèle les uns par rapport aux autres et dont les moyens de rappel à mémoire de forme sont connectés électriquement, en paral lèle ou en série, à des commutateurs de commande actionnés par des touches enfonçables interdépendantes.

Un tel dispositif permet, par enfoncement d'une touche de commande, de sélectionner une combinaison particulière de fonctions réalisables par un circuit logique.

Dans une application de l'invention, concernant en particulier l'industrie automobile, le ou chaque élément déplaçable est l'organe mobile d'un commutateur pneumatique qui est monté en série dans le circuit d'alimentation d'un organe à pression de fluide, tel par exemple qu'un vérin pneumatique.

Dans la description qui suit, faite à titre d'exemple, on se réfère aux dessins annexés, dans lesquels :

   - les figures 1 et 2 représentent schématiquement les deux états possibles d'un dispositif selon l'invention, associé à un commutateur pneumatique;

- les figures 3A, 3B et 3C représentent schématiquement le mode de fonctionnement du commutateur pneumatique;

- la figure 4 est un schéma électrique d'un dispositif de commande comprenant plusieurs dispositifs selon l'invention;

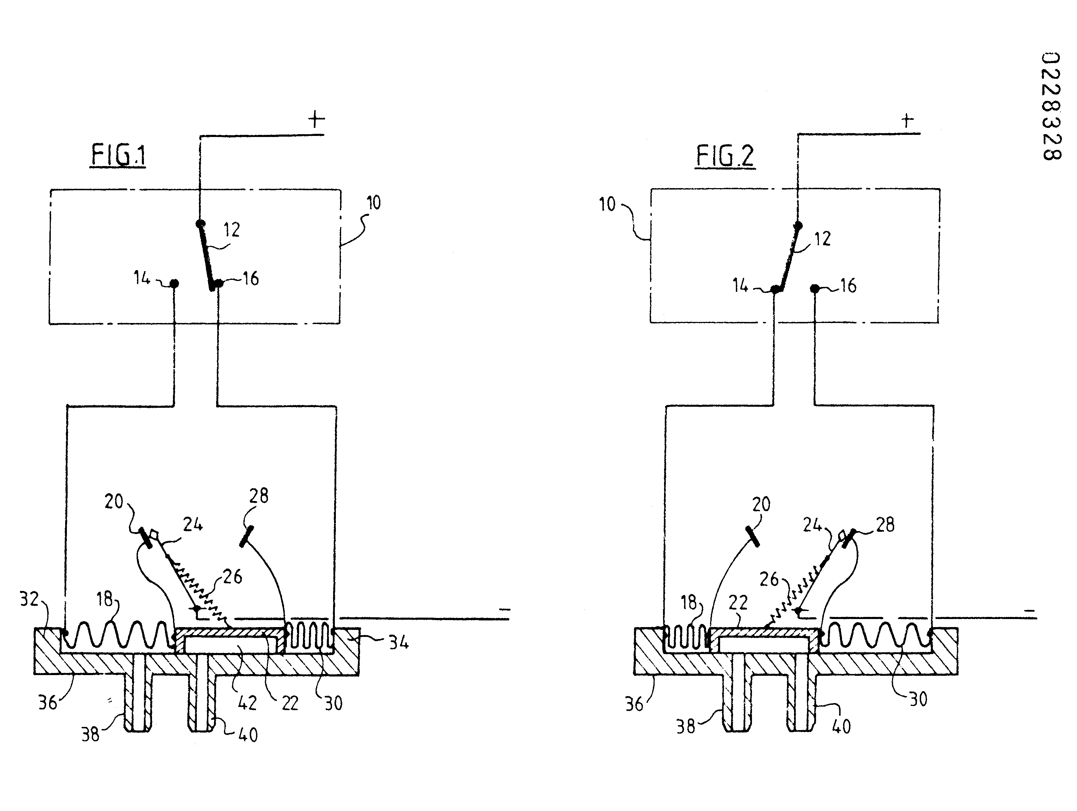

On se réfère d'abord aux figures 1 et 2 qui représentent schématiquement un dispositif de commande selon l'invention.

Ce dispositif comprend un commutateur-inverseur de commande 10, monté par exemple sur le tableau de bord d'un véhicule automobile, et qui comprend un contact mobile 12 relié à une borne d'une source d'énergie électrique et déplaçable, par son utilisateur, entre deux contacts fixes 14 et 16 respectivement.

Le contact fixe 14 du commutateur 10 est relié électriqment à une extrémité d'un premier moyen de rappel 18 réalisé en matériau électriquement conducteur à mémoire de forme, dont l'autre extrémité est reliée électriquement à un contact fixe 20 d'un commutateur électrique associé à un élément mobile 22 en matériau électriquement isolant déplaçable entre deux positions prédéterminées.

Le contact mobile 24 de ce commutateur est relié par un ressort de compression 26 à l'élément mobile 22. Le second contact fixe 28 de ce commutateur est relié électriquement à une extrémité d'un second moyen de rappel 30 électriquement conducteur à mémoire de forme dont l'autre extrémité est reliée à l'autre contact fixe 16 du commutateur-inverseur de commande 10.

Le contact mobile 24 due commutateur associé à l'élément mobile 22 est relié électriquement à l'autre borne de la source d'énergie électrique.

Les deux moyens de rappel 18 et 30 en matériau à mémoire de forme sont montés mécaniquement en opposition sur l'élément mobile 22, celui-ci étant disposé et déplaçable entre les deux moyens de rappel qui, par ailleurs, sont fixés sur des butées fixes 32 et 34 respectivement, formées par exemple par des parois d'un boîtier 36 en matériau électriquement isolant comprenant deux embouts tubulaires 38 et 40 débouchant sur le parcours de l'élément mobile 22.

L'embout tubulaire 38 est par exemple relié à un organe à pression de fluide, tel qu'un vérin pneumatique à simple effet pour l'alimenter sélectivement en pression de fluide ou en air à pression atmosphérique, tandis que l'autre embout tubulaire 40 est relié à une source de pression de fluide, par exemple d'air, cette pression étant soit supérieure, soit inférieure à la pression atmosphérique.

L'élément mobile 22 délimite une chambre fermée 42 avec la face de la paroi du boîtier 36 sur laquelle débouchent les embouts 38 et 40. Cette chambre 42 est définie par un rebord 44 de l'élément mobile 22, l'épaisseur de ce rebord étant supérieure au diamètre interne d'un embout 38 ou 40, de façon à pouvoir fermer de façon étanche le débouché de cet embout. La longueur de la chambre 42, ou sa dimension dans le sens de déplacement de l'élément mobile 22, est supérieure à la distance entre les débouchés des embouts 38 et 40, de façon à ce que ces deux embouts puissent déboucher dans la chambre 42 lorsque l'élément mobile 22 est dans une position prédéterminée.

Comme indiqué plus haut, les moyens 18, 30 de rappel déplacement de l'élément mobile 22 entre deux positions prédéterminées sont en un matériau électriquement conducteur à mémoire de forme qui, quand il est chauffé par passage d'un courant électrique, prend une forme prédéterminée et qui, quand il n'est pas parcouru par le courant électrique et se refroidit, peut prendre n'importe quelle forme en exerçant alors sur l'élément 22 une force qui est sensiblement négligeable.

Un tel matériau est disponible dans le commerce sous la marque VEASE et est commercialisé notamment par la société RAYCHEM.

Le fonctionnement du dispositif selon l'invention va maintenant être décrit en référence aux figures 1, 2, 3A, 3B et 3C.

En figure 1, l'interrupteur de commande 10 a été actionné de telle sorte que son contact mobile 12 soit relié au contact fixe 16 lui-même relié électriquement à une extrémité du moyen de rappel 30 dont l'autre extrémité est reliée au contact fixe 28 du commutateur associé à l'élément mobile 22. Le contact mobile 24 de ce commutateur est relié à l'autre contact fixe 20 de ce commutateur, de sorte qu'aucun courant électrique ne passe dans l'un ou dans l'autre des moyens de rappel 18 et 30 et que la liaison avec la source d'énergie électrique est interrompue. L'élément mobile 22 est dans l'une de ses positions prédéterminées, dans laquelle il recouvre et obture le débouché de l'embout 40 relié à la source de pression de fluide, l'embout 38 débouchant alors à l'air libre.

Si ensuite on actionne le commutateur 1 pour relier le contact mobile 12 au contact fixe 14, un courant électrique passe dans le moyen de rappel 18 par le circuit 12, 14, 18, 20,24. Le moyen de rappel 18 parcouru par le courant électrique s'échauffe immédiatement et prend alors une forme prédéterminée représentée en figure 2 en jouant le rôle d'un ressort de traction et en déplaçant l'élément mobile 22 dans son autre position prédéterminée, dans laquelle les embouts 38 et 40 communiquent l'un avec l'autre par la chambre 42 de l'élément mobile 22.

Le ressort 26 reliant l'élément 22 au contact mobile 24 du commutateur qui lui est associé, est un ressort de compression, de sorte qu'il maintient le contact mobile 24 dans la position de la figure 1, en liaison avec le contact fixe 20, jusqu'au voisinage de la fin du déplacement de l'élément mobile 22. Au cours de ce déplacement, le ressort 26 est comprimé et, vers la fin du déplacement, il fait basculer le contact mobile 24 pour l'amener sur l'autre contact fixe 28 du commutateur. Le passage du courant électrique dans le moyen de rappel 18 est alors interrompu, et aucun courant électrique ne passe cependant dans l'autre moyen de rappel 30, tant que le contact mobile 12 du commutateur de commande 10 reste en liaison avec le contact fixe 14 de ce commutateur.

Inversement, pour passer de l'état de la figure 2 à celui de la figure 1, il suffit d'actionner le commutateur de commande 10 pour amener son contact mobile 12 en liaison avec le contact fixe 16. Le moyen de rappel 30 est alors chauffé par passage d'un courant électrique, reprend sa forme prédéterminée et joue le rôle d'un ressort de traction pour amener l'élément mobile 22 dans la position représentée en figure 1, à la suite de quoi le contact mobile 24 du commutateur associé à l'élément mobile 22 bascule à nouveau et revient dans l'état représenté en figure 1. Le commutateur pneumatique fonctionne donc comme un commutateur bistable en électricité.

Dans cet exemple, les moyens de rappel 18 et 30 à mémoire de forme jouent le rôle de ressorts de traction lorsqu'ils sont parcourus par un courant électrique. Leurs extrémités sont fixées, de façon appropriée, d'une part à l'élément mobile 22, et d'autre part à la paroi fixe 32 ou 34 respectivement du boîtier 36.

Ces moyens de rappel 18 et 30 pourraient être utilisés comme ressorts de compression, en inversant leurs connexions avec les contacts fixes 14 et 16 du commutateur de commande 10.

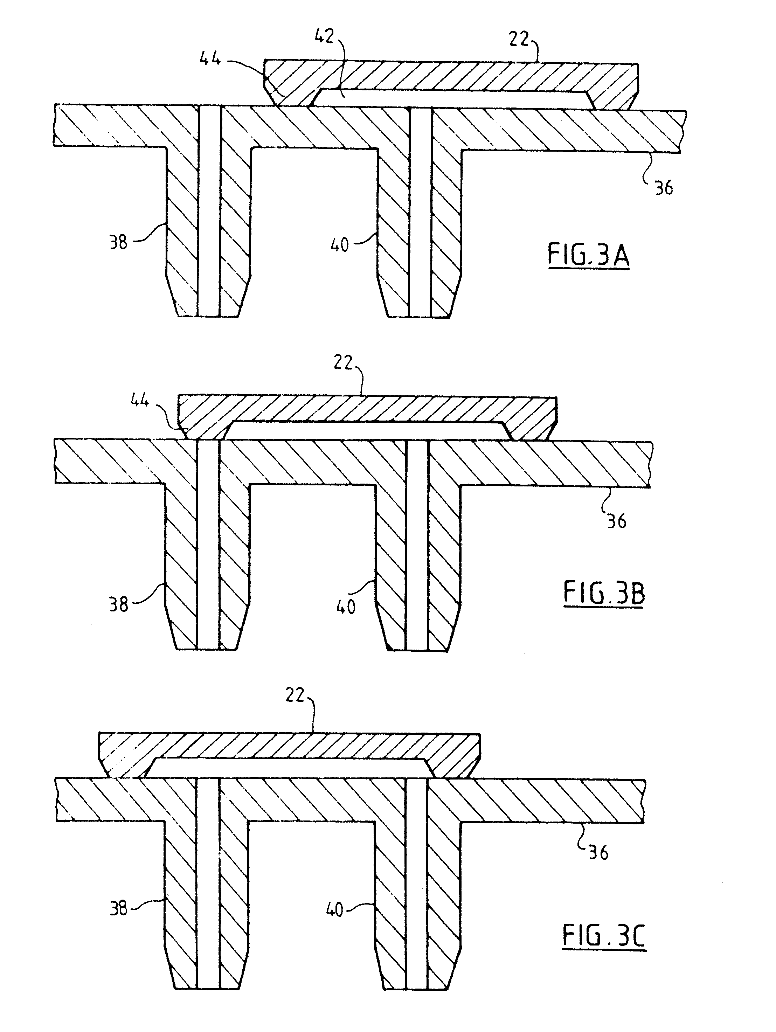

On voit, en référence à la figure 3B, que le débouché de l'embout 38 est obturé de façon étanche par le rebord 44 à un moment donné au cours du déplacement de l'élément 22 entre ses deux positions prédéterminées, ce qui évite que la source de pression de fluide soit reliée à l'air libre à ce moment. L'élément mobile 22 recouvre en permanence le débouché de l'embout 40, tandis que le débouché de l'embout 38 est sélectivement recouvert ou libéré par l'élément mobile 22.

L'organe à pression de fluide, par exemple un vérin pneumatique à simple effet, est ainsi sélectivement alimenté en pression de fluide ou mis à l'échappement.

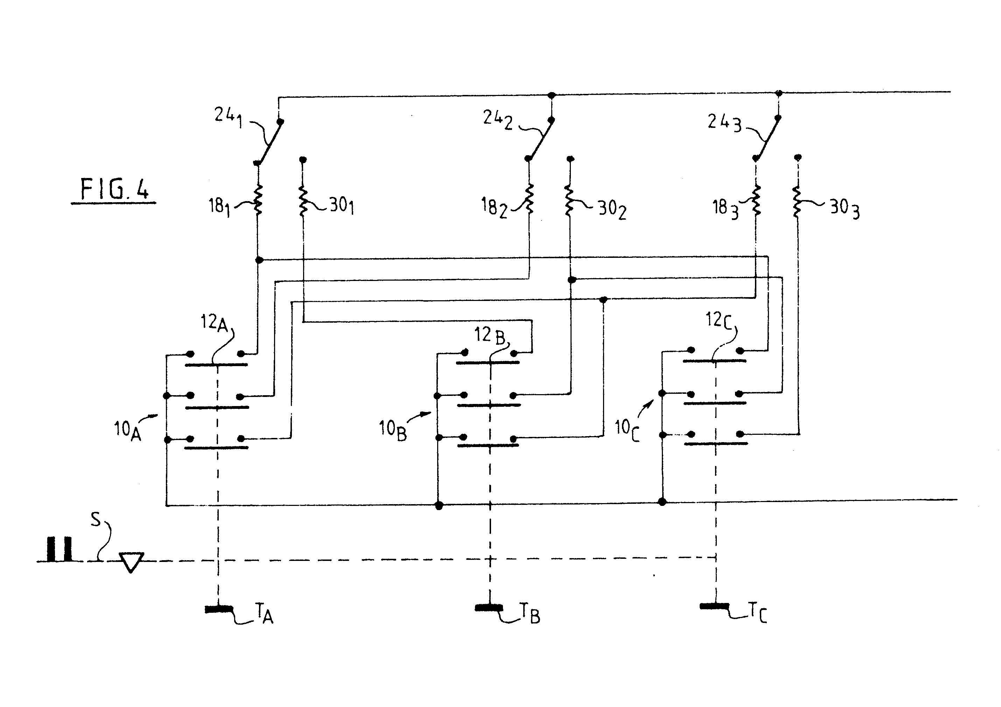

On se réfère maintenant à la figure 4 représentant le schéma électrique d'une installation de commande comprenant plusieurs dispositifs selon l'invention, utilisés en combinaison.

Ces dispositifs, au nombre de trois dans cet exemple de réalisation, sont schématisés par leurs moyens de rappel électriquement conducteurs à mémoires de forme, désignés par les références $18_1$, et $30_1$, $18_2$ et $30_2$, $18_3$ et $30_3$, respectivement, et par les commutateurs électriques associés à leurs éléments mobiles, désignés par les références $24_1$, $24_2$ et $24_3$ respectivement.

Les commutateurs de commande de ces dispositifs sont des interrupteurs triples 10A, 10B et 10C respectivement, actionnés par des touches $T_A$, $T_B$ et $T_C$ respectivement enfonçables par l'utilisateur.

Ces touches sont interdépendantes et, pour cela, sont associées à un système connu S de verrouillage en position enfoncée qui est tel que, lorsqu'une touche est enfoncée pour fermer l'interrupteur triple qui lui est associé, elle libère automatiquement une touche précédemment enfoncée, de sorte que deux touches ne peuvent être simultanément maintenues en position enfoncée.

Les contacts mobiles $12_A$, $12_B$, ou $12_C$ d'un interrupteur $10_A$, $10_B$, $10_C$ respectivement relient, quand la touche correspondante est enfoncée, une borne de la source d'énergie électrique aux moyens de rappel à mémoire de forme qui sont reliés électriquement à ces interrupteurs. Les commutateurs $24_1$, $24_2$ et $24_3$ relient chacun un ressort à mémoire de forme à l'autre borne de la source d'énergie électrique.

Dans l'exemple représenté, l'interrupteur $10_A$ est relié aux moyens de rappel $18_1$, $18_2$ et $18_3$, l'interrupteur $10_B$ est relié aux moyens de rappel $30_1$, $30_2$ et $18_3$, l'interrupteur $10_C$ est relié aux moyens de rappel $18_1$, $30_2$ et $30_3$.

Si la touche $T_A$ est enfoncée à partir de l'état représenté en figure 4, les moyens de rappel $18_1$, $18_2$ et $18_3$ sont parcourus par un courant électrique, les éléments mobiles associés sont déplacés dans leurs positions prédéterminées opposées, et les vérins pneumatiques associés à ces trois dispositifs sont tous alimentés en pression de fluide.

Lorsque la touche $T_B$ est enfoncée à partir de l'état repré senté en figure 4, seul le moyen de rappel $18_3$ est parcouru par un courant électrique et déplace l'élément mobile associé pour alimenter le vérin correspondant en pression de fluide, les deux autre vérins restant dans l'état où ils se trouvent, c'est-à-dire à l'échappement.

Quand la touche $T_C$ est enfoncée à partir de l'état représenté en figure 4, seul le moyen de rappel $18_1$ est parcouru par un courant électrique et déplace l'élément mobile associé dans la position opposée pour alimenter le vérin correspondant en pression de fluide, les deux autres vérins restant dans l'état où ils se trouvent, c'est-à-dire à l'échappement.

Lorsqu'un vérin se trouve déjà dans la position qui lui est demandée, rien ne se passe et le vérin reste dans cette position.

## Revendications

1. Dispositif de commande électrique du déplacement d'un élément (22) entre deux positions prédéterminées, cet élément étant associé à deux moyens (18, 30) respectivement disposés de part et d'autre de l'élément (22) et susceptibles d'exercer sur ledit élément (22) des forces en sens opposés pour le déplacer vers l'une desdites positions, l'un au moins des moyens (18, 30) étant en outre constitué en un matériau électriquement conducteur à mémoire de forme, ce dispositif étant caractérisé par le fait que l'élément déplaçable (22) est relié par un moyen de rappel au contact mobile (24) d'un commutateur électrique monté en série avec ledit moyen (18, 30) à mémoire de forme, ce commutateur étant propre à couper le passage d'un courant électrique dans le moyen de rappel lorsque l'élément (22) a été déplacé d'une position dans l'autre par la force exercée sur lui par les moyens (18, 30) à mémoire de forme.

2. Dispositif selon la revendication 1, caractérisé en ce que le matériau électriquement conducteur à mémoire de forme est propre, quand il est chauffé par passage du courant électrique, à prendre une forme prédéterminée en exerçant sur ledit élément (22) dans une première position et quand il n'est pas traversé par un courant électrique, d'exercer une force sensiblement négligeable sur ledit élément (22).

3. Dispositif selon la revendication 2, caractérisé en ce que l'autre moyen de rappel (30) de l'élément (22) est constitué en un matériau électriquement conducteur à mémoire de forme, qui est monté électriquement en parallèle avec le premier moyen de rappel (18) à mémoire de forme, ces deux moyens de rappel étant reliés à une source d'énergie électrique par un commutateur-inverseur de commande (10).

4. Dispositif selon la revendication 3, caractérisé en ceq ue les deux moyens de rappel (18, 30) à mémoire de forme sont montés électriquement en parallèle entre le commutateur-inverseur de commande (10) et le commutateur (24) associé à l'élément mobile (22).

5.Dispositif selon l'une des revendications précédentes, caractérisé en ce qu'il comprend plusieurs éléments déplaçables chacun entre deux positions prédéterminées, montés en parallèle les uns par rapport aux autres et dont les moyens de rappel à mémoire de forme ($18_1$, $30_1$, $18_2$, $30_2$, $18_3$, $30_3$) sont connectés électriquement en parallèle ou en série à des commutateurs ($10_A$, $10_B$, $10_C$) de commande actionnés par des touches enfonçables ($T_A$, $T_B$, $T_C$) interdépendantes.

6. Dispositif selon l'une des revendications précédentes, caractérisé en ce que le ou chaque élément déplaçable est l'organe mobile (22) d'un commutateur pneumatique monté en série dans le circuit d'alimentation d'un organe à pression de fluide, tel par exemple qu'un vérin pneumatique.

FIG.1

FIG.2

0228328

0228328

FIG.3A

FIG.3B

FIG.3C

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| P,X | DE-A-3 539 559 (TOKAI RIKA DENKI SEISAKUSHO) * Résumé; page 5, lignes 1-6; page 6, lignes 16-23; page 7, lignes 1-16; page 11, lignes 16-23; page 12; page 13, lignes 1-10; pages 16,17,18 * | 1-4,6 | F 03 G 7/06 G 12 B 1/00 H 02 N 10/00 |
| | --- | | |
| Y | FR-A-2 549 978 (PEUGEOT-CITROEN) * Résumé; page 1, lignes 1-3,25-28; page 2, lignes 15-31; page 3, lignes 3-8; page 5; page 6, lignes 9-21 * | 1-4 | |
| | --- | | |
| Y | US-A-3 893 050 (WESTINGHOUSE) * Figures 7,8,9,11; colonne 3, lignes 24-35; colonne 5, lignes 36-63 * | 1-4 | |
| | --- | | DOMAINES TECHNIQUES RECHERCHES (Int. Cl.4) |
| X | EP-A-0 145 204 (ARMADA) * Résumé; page 6, lignes 18-35; page 7, lignes 1-13; page 8, lignes 4-16,25-33; pages 9,10; page 11, lignes 1-22; page 12, lignes 33-35; page 13, lignes 1-29 * | 1-4 | F 03 G F 16 K G 12 B H 02 N H 01 H |
| | --- | | |
| X | GB-A-2 068 545 (DELTA MATERIALS RESEARCH LTD) * Page 2, lignes 30-106 * | 1,2 | |
| | --- -/- | | |

Le présent rapport de recherche a été établi pour toutes les revendications

| Lieu de la recherche | Date d'achèvement de la recherche | Examinateur |
|---|---|---|
| LA HAYE | 20-03-1987 | JORIS J.C. |

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 725 835  (HOPKINS) <br> * Résumé; colonne  3,  lignes 48-68;  colonne  4,  lignes 1-9,22-59 * | 1-3 | |
| A | PATENT ABSTRACTS OF JAPAN, vol. 9, no. 297 (M-432)[2020], 25 novembre 1985; & JP-A-60 135 673 (KOJIMA PRESS KOGYO K.K.) 19-07-1985 <br> * Résumé; figure * | 1-3 | |
| A | US-A-3 613 732  (ROBERTSHAW CONTROLS) <br> * Résumé; colonne 7, lignes  1-66 * | 1,2,6 | |
| A | US-A-3 917 327   (MICRO DEVICES) | | DOMAINES TECHNIQUES RECHERCHES (Int. Cl.4) |
| A | FR-A-1 499 804   (FILTERWERK MANN & HUMMEL) | | |
| A | US-A-4 463 560   (ITEK) | | |
| A | US-A-3 676 815   (ESSEX) | | |

Le présent rapport de recherche a été établi pour toutes les revendications

| Lieu de la recherche | Date d'achèvement de la recherche | Examinateur |
|---|---|---|
| LA HAYE | 20-03-1987 | JORIS J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82